# FASCICULE DE BREVET EUROPEEN

(11) **EP 2 388 557 B1**
(45) Date de publication et mention de la délivrance du brevet: **18.08.2021**
(21) Numéro de dépôt: 11167151.7
(22) Date de dépôt: 23.05.2011
(51) Int. Cl.: G01D 5/34

(54) **Capteur optique de position angulaire absolue utilisant la technique de la polarimétrie**
Optischer Sensor zur Erfassung der absoluten Winkelposition unter Verwendung der Polarimetrietechnik
Optical sensor of absolute angular position using the polarimetry technique

(30) Priorité: 21.05.2010 FR 1053981
(43) Date de publication de la demande: 23.11.2011
(73) Titulaire: Codechamp, 23190 Champagnat (FR); CENTRE NATIONAL D'ETUDES SPATIALES, 75001 Paris (FR)
(72) Inventeur: Gibard, Dominique, 23190, BELLEGARDE EN MARCHE (FR); Grass, Alain, 23190, SAINT SILVAIN BELLEGARDE (FR); Talvat, Taras, 23200, AUBUSSON (FR); Tremolieres, Sylvain, 31500, TOULOUSE (FR); Guay, Philippe, 31240, L'UNION (FR)
(74) Mandataire: Delorme, Nicolas

(56) Documents cités:
- EP-A1- 2 187 178
- WO-A2-2004/102225
- FR-A1- 2 868 527
- FR-A1- 2 916 042
- JP-A- 60 082 808
- JP-A- S59 224 516
- US-A- 5 159 192
- US-A- 6 031 613
- US-A1- 2005 002 032
- US-A1- 2005 211 886

## Description

### DOMAINE TECHNIQUE GENERAL

L'invention concerne un capteur optique utilisé notamment pour déterminer la position angulaire d'un objet par rapport à un autre.

### ETAT DE LA TECHNIQUE

Un capteur optique permet de réaliser une mesure précise de la position angulaire absolue d'un objet.

De tels capteurs sont utilisés dans des domaines techniques où il est nécessaire d'obtenir une mesure angulaire précise et fiable de la position d'un objet tout en limitant les contacts entre les pièces le constituant. Il s'agit notamment des domaines aéronautique et spatial.

De tels capteurs comprennent une source lumineuse émettant un faisceau lumineux qui traverse ensuite un disque polarisant. Le disque a un mouvement rotatif dépendant du déplacement angulaire d'un axe du capteur qui est tournant et dont la rotation est liée au mouvement de l'objet dont on veut mesurer la position.

Le disque polarisant induit une polarisation rectiligne de la lumière reçue.

En aval du disque polarisant, on dispose un polariseur divisé en zones ayant des directions de polarisation différentes et un module de réception d'un signal lumineux permettant de mesurer l'intensité lumineuse traversant le polariseur qui lui-même la reçoit d'une source de lumière placée en amont.

La loi de Malus précise que l'intensité lumineuse reçue par rapport à l'intensité émise dépend de l'angle de entre les directions de polarisation de la lumière et du secteur du polariseur intercalé entre le disque et le module de réception. Plus précisément, selon la loi de Malus l'intensité reçue I de la lumière dépend d'une part de l'intensité lumineuse I₀ émise par la source, et d'autre part, de l'angle θ entre la direction de polarisation du premier élément polarisant traversé et de la direction de polarisation du second élément polarisant traversé. Cette intensité I est telle que I=I₀.cos²(θ).

On peut ainsi, par un traitement mathématique approprié, en connaissant l'intensité lumineuse I₀ de départ et l'intensité lumineuse I reçue, en déduire l'angle de rotation θ de la direction de polarisation donc du plan de polarisation. Si cette rotation correspond à la rotation d'un objet, on détermine ainsi la position angulaire de ce dernier.

Ces capteurs présentent l'avantage d'être en technologie tout optique et limitent donc le nombre de pièces mécaniques. Toutefois, ces capteurs ne permettent pas une mesure absolue sur 360°.

Le document US2005/002032 A1 décrit un capteur optique de position angulaire absolue sur 360° d'un axe mobile en rotation. Ce capteur comprend une source lumineuse et des polariseurs ainsi que des moyens de discrimination de chaque demi tour. La source lumineuse et un récepteur multicanaux sont déposés du même côté par rapport au disque mobile polarisant.

### PRESENTATION DE L'INVENTION

Un objectif de l'invention est de permettre une mesure angulaire absolue sur 360° au moyen d'un capteur optique.

Selon un premier aspect, l'invention concerne un capteur optique de position angulaire absolue sur 360° tel que décrit dans la revendication 1.

D'autres aspects du capteur optique selon le premier aspect de l'invention sont décrits dans les revendications dépendantes 2-6.

Selon un second aspect, l'invention concerne un procédé d'obtention de la position angulaire d'un axe mobile en rotation au moyen d'un capteur optique selon le premier aspect de l'invention, le procédé comprenant les étapes consistant à :
- générer des signaux sinusoïdaux représentatifs d'une intensité lumineuse issue d'un polariseur fixe ;
- détecter les parties linéaires de chaque signal sinusoïdal ;
- générer un signal de demi-rampe représentant chaque partie linéaire détectée en fonction de l'angle de rotation de l'axe du capteur ;
- générer un signal rampe sur 360° proportionnel à la position angulaire de l'objet à mesurer à partir du signal demi-rampe et du signal détrompeur.

### PRESENTATION DES FIGURES

D'autres caractéristiques et avantages de l'invention ressortiront encore de la description qui suit laquelle est purement illustrative et non limitative et doit être lue en regard des dessins annexés sur lesquels :
- la figure 1 illustre un mode de réalisation d'un exemple de capteur optique.
- la figure 2 illustre un mode de réalisation d'un exemple de capteur optique.
- la figure 3 illustre les signaux générés par le capteur optique de l'invention ;
- la figure 4 illustre un mode de réalisation d'un exemple de capteur optique.
- la figure 5 illustre un mode de réalisation d'un exemple de capteur optique.
- les figures 6a et 6b illustrent deux configurations d'un exemple de capteur optique.
- la figure 7 illustre un mode de réalisation du capteur optique de l'invention ;
- la figure 8 illustre un mode de réalisation d'un exemple de capteur optique.
- la figure 9 illustre un mode de réalisation d'un exemple de capteur optique.
- la figure 10 illustre schématiquement les étapes du procédé de traitement des signaux du capteur optique de l'invention ;
- la figure 11 illustre des signaux générés par le capteur optique de la figure 5 ;
- la figure 12 illustre un signal obtenu après traitement des signaux de la figure 10 pour permettre d'obtenir la position angulaire détectée par le capteur de l'invention ;
- la figure 13 illustre l'obtention du signal permettant d'obtenir la position angulaire au moyen du capteur de l'invention.

### DESCRIPTION DETAILLEE DE L'INVENTION

### Capteur optique

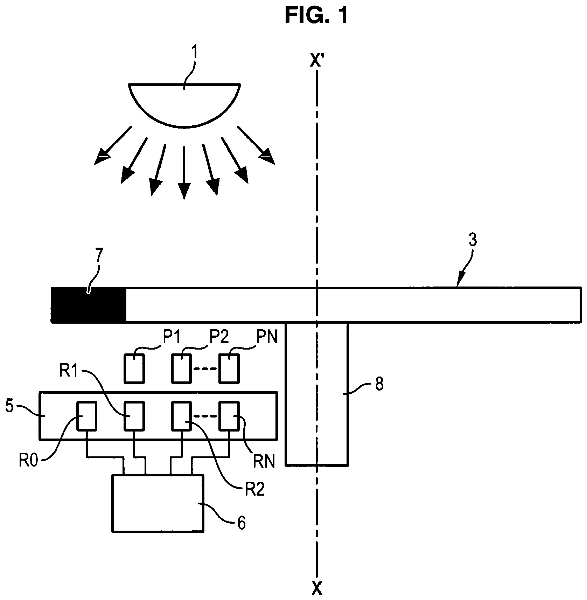

Sur la figure 1, le capteur optique de position angulaire absolue d'un axe 8 mobile en rotation comprend :
- un disque polarisant 3 mobile destiné à polariser linéairement la lumière, le disque polarisant 3 étant solidaire de l'axe 8 ;
- une source lumineuse 1 destinée à émettre un faisceau lumineux vers le disque mobile polarisant 3 ;
- une pluralité de polariseurs fixes P1-PN, chacun étant destiné à polariser linéairement la lumière selon une direction prédéfinie ;
- un module de réception 5 multicanaux destiné à générer au moins deux signaux proportionnels à l'intensité lumineuse du faisceau issu des polariseurs P1-PN.

Pour discriminer chaque demi-tour de l'axe 8, le capteur comprend en outre des moyens de discrimination 7,7' de chaque demi-tour de l'axe 8 disposés sur le trajet du faisceau lumineux de manière qu'à chaque demi-tour de l'axe 8 le module de réception 5 génère au moins un signal détrompeur différent.

Grâce à une telle discrimination il est possible de déterminer à quel demi-tour correspondent les signaux reçus par le module de réception 5.

On détaille ci-dessous les différents éléments constituant le capteur.

### Source lumineuse

La source lumineuse 1 permet d'émettre une lumière polarisée de manière aléatoire (c'est-à-dire non polarisée).

Cette source lumineuse 1 peut être formée par au moins une diode électroluminescente et la longueur d'onde de la lumière est choisie en fonction des polariseurs utilisés.

La longueur d'onde est comprise entre 500 et 1200 nm, typiquement 850 nm.

De manière avantageuse une lentille peut être disposée devant la source lumineuse 1 (non représenté) afin de concentrer le faisceau ce qui permet de limiter les pertes d'intensités lumineuses.

### Disque mobile polarisant

Le disque mobile polarisant 3 est un disque polariseur linéaire qui est solidaire de l'axe 8. Il peut être monté de manière amovible sur l'axe 8. L'axe 8 est relié à l'objet (non représenté) dont on veut mesurer la position angulaire absolue.

Le disque mobile polarisant 3 est un disque polarisé de type connu en matière translucide, par exemple du type SR42, ou un disque constitué d'un matériau réflecteur polarisant.

La direction de polarisation du disque polarisant 3 est adaptée à la nature du faisceau lumineux.

Le disque mobile polarisant 3 a une épaisseur comprise entre 0,05 et 10 mm, typiquement 1,8 mm.

Du fait que le disque mobile polarisant est un polariseur linéaire, il n'autorise le passage d'un faisceau lumineux que dans une seule direction de polarisation.

### Moyens de discrimination

Sur la figure 1, les moyens de discrimination sont constitués par un traitement 7 spécifique effectué sur une moitié du disque polarisant 3 et sont tels qu'un faisceau issu de la partie traité soit discriminé d'un faisceau issu de la partie non traitée.

De manière plus précise, le traitement spécifique est un dépôt 7 de chrome effectué sur une moitié périphérique du disque polarisant 3.

Un tel traitement a pour effet que lorsque le faisceau lumineux arrive sur cette partie du disque polarisant 3 il est occulté par le dépôt de chrome en fonction du demi-tour considéré. Ainsi pour une moitié du disque polarisant 3, un signal est généré par le module de réception 5 tandis que pour l'autre moitié du disque polarisant 3 aucun signal n'est généré par le module de réception 5.

De manière plus générale, on peut envisager n'importe quels moyens de discrimination pourvu qu'à chaque demi-tour du disque polarisant 3, le module de réception 5 puisse générer un signal détrompeur différent. En fait il s'agit de générer un signal ou pas de signal.

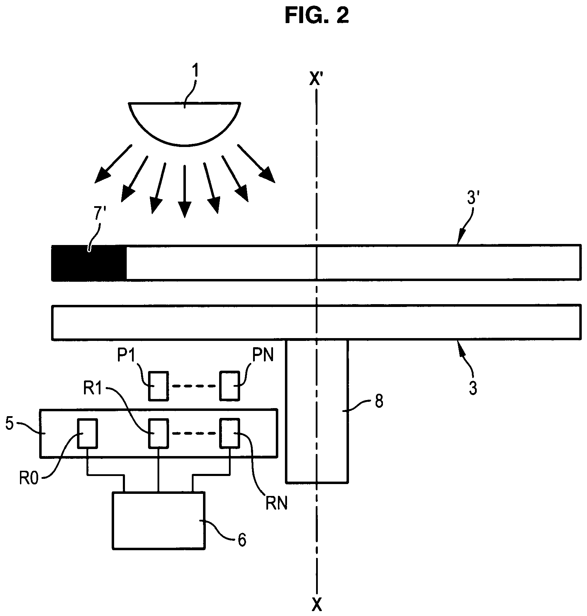

Par exemple, comme illustre sur la figure 2, il peut s'agir d'une couronne discriminante ou d'un disque discriminant disposé sur le trajet qui peut assurer la même fonction que celle ci-dessus décrite (voir figure 2).

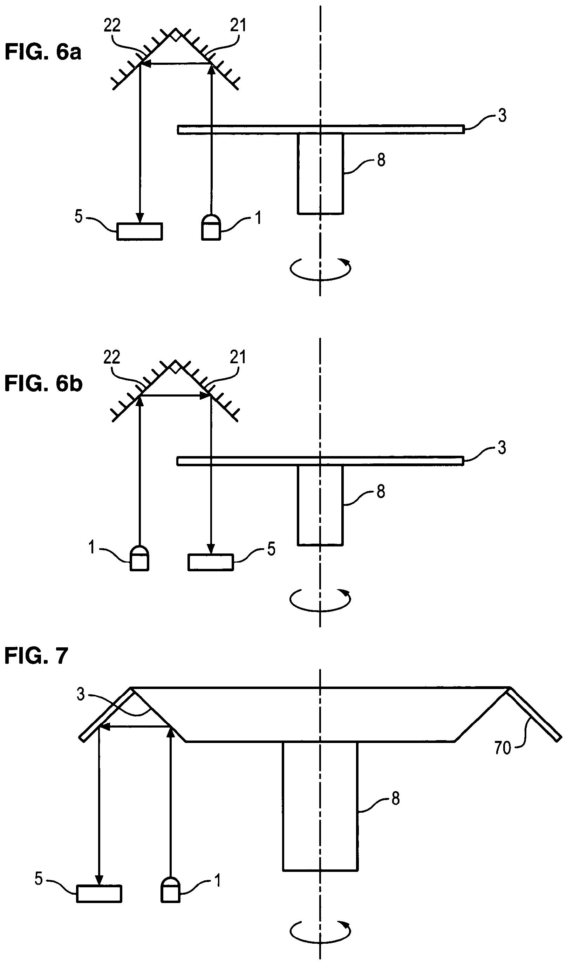

En outre, comme cela est illustré sur la figure 7 les moyens de discrimination peuvent être formés par deux surfaces réfléchissantes formées dans l'épaisseur du disque comme cela sera détaillé par la suite.

### Polariseurs fixes et module de réception multicanaux

Le capteur comprend un module de réception 5 multicanaux et des polariseurs fixes P1-PN.

Les canaux R0-RN permettent de recevoir les signaux issus des polariseurs P1-PN et le signal détrompeur.

En outre, dans cet exemple le signal détrompeur ne provient pas d'un polariseur (voir les figures 1 et 2).

Chaque polariseur P1-PN est destiné à polariser linéairement la lumière selon une direction prédéfinie comprise entre 0 et 180°.

Le module de réception 5 multicanaux est plus précisément constitué de N+1 photodétecteurs dans le cas où le signal détrompeur ne provient pas d'un polariseur, sinon il y autant de photodétecteurs que de polariseur.

La génération des signaux est fondée sur le fait que la direction de polarisation du polariseur mobile est liée à la position angulaire de l'axe 8 et que l'intensité lumineuse - comme déjà évoqué - reçue est modulée en fonction de la loi de Malus ce qui permet d'obtenir des signaux sinusoïdaux (voir ci-dessous).

### Module de traitement

Le capteur comprend un module de traitement 6 pour traiter les signaux générés par le module de réception 5 multicanaux.

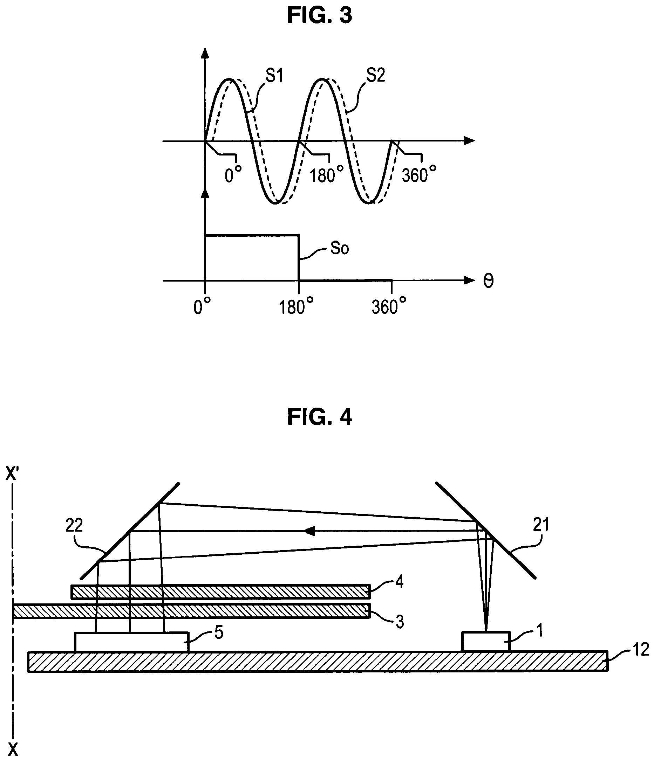

Les signaux générés par le module de réception 5 multicanaux sont illustrés sur la figure 3.

Sur cette figure on a illustré deux signaux S1 et S2 sinusoïdaux générés par deux canaux R1, R2 du module de réception 5 et le signal S0 détrompeur généré par un canal R0 du module de réception dans le cas où un dépôt de chrome est effectué sur le disque 3.

Comme on peut le constater pour un demi-tour un signal S0 est détecté tandis que pour l'autre demi-tour le signal S0 est nul.

Ainsi, le signal S0 permet de déterminer à quel demi-tour correspondent les signaux S1, S2 et par conséquent l'association des signaux reçus S1, S2 et du signal détrompeur S0 permet de déterminer sans ambigüité la position angulaire absolue sur 360° de l'axe du capteur.

On note qu'il faut au moins deux signaux reçus S1, S2 pour pouvoir déterminer la position angulaire θ de l'axe 8.

Pour déterminer la position angulaire de l'axe 8, le module de traitement 6 effectue un traitement mathématique des différents signaux et détermine un arc tangent et en déduit l'angle que fait la direction de polarisation du disque 3 par rapport à la direction de polarisation de chaque polariseur fixe P0-PN et donc la position angulaire de l'axe 8.

On détaille ci-dessous plusieurs réalisations dans lesquelles, la source lumineuse 1 est du même côté que le récepteur multicanaux. Ceci permet de limiter l'encombrement du capteur.

### Premier mode de réalisation

La figure 4 illustre un capteur comprenant en outre des moyens de réflexion 21, 22 disposés de manière à ce que la source lumineuse ne soit pas disposée au dessus du disque 3.

Un tel agencement est illustré sur la figure 4. Cet agencement est similaire aux exemples illustrés sur les figures 1 et 2 à la différence qu'il comprend ces moyens de réflexion 21, 22.

Les moyens de réflexion sont en outre agencés pour dévier vers le module de réception 5 multicanaux, le faisceau émis par la source lumineuse 1.

Dans ce mode de réalisation, la source lumineuse 1 et le récepteur multicanaux sont sensiblement disposés sur un même plan 12, de manière préférée sur le même plan 12.

On pourra se référer au document FR 2 916 042 pour la description d'autres arrangements qui permettent de limiter l'encombrement d'un capteur optique tel que décrit ici.

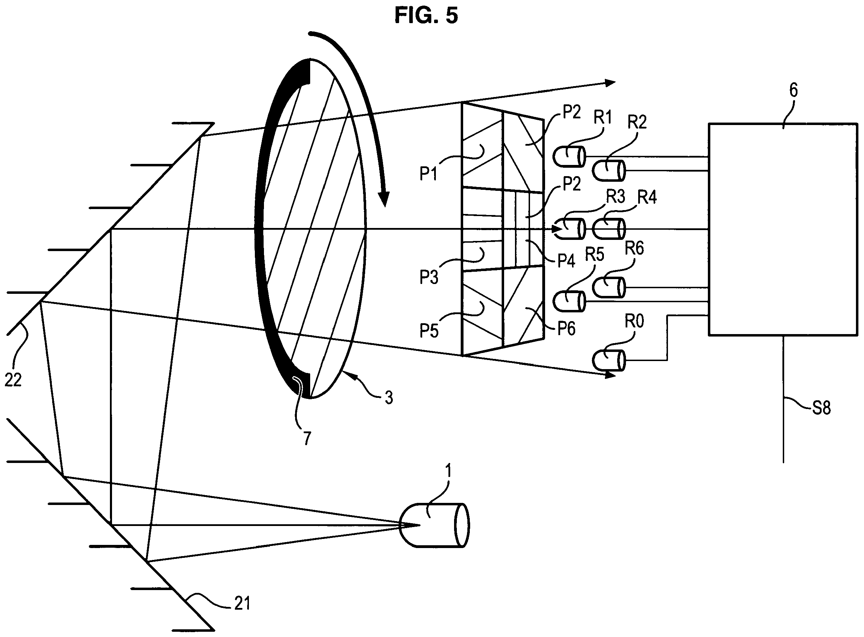

La figure 5 illustre une réalisation du capteur illustré sur la figure 4.

Ce capteur comprend en particulier six polariseurs fixes P1-P6, un module de réception 5 à sept canaux R0-R6. Le signal détrompeur de demi-tour ne passe pas par les polariseurs.

Les moyens de discrimination sont constitués par un dépôt 7 de chrome effectué en périphérie du disque 3 sur un demi-tour.

### Second mode de réalisation

Les figures 6a et 6b illustrent un mode de réalisation dans lequel pour avoir la source lumineuse 1 et le récepteur multicanaux 5 disposés du même côté du disque 3 polarisant, le capteur comprend deux miroirs 21, 22 inclinés de 45° par rapport à la direction du faisceau lumineux et disposés perpendiculairement entre eux.

Sur la figure 6a, la configuration est telle qu'un faisceau lumineux issu de la source lumineuse 1 traverse le disque et est réfléchi vers le récepteur multicanaux sans repasser par le disque.

Ainsi, dans cette configuration, les moyens de réflexion 21, 22 sont disposés sur le trajet d'un faisceau issu de la source lumineuse 1 ayant traversé le disque, les moyens de réflexion étant destinés à dévier un faisceau ayant traversé le disque vers le récepteur multicanaux sans retraverser le disque.

Sur la figure 6b la configuration est telle que le faisceau lumineux traverse le polariseur après avoir été successivement réfléchi par les moyens de réflexion 22 et 21, ces moyens de réflexion étant des miroirs.

Ainsi, dans cette configuration, les moyens de réflexion 21, 22 sont disposés sur le trajet d'un faisceau issu de la source lumineuse 1 n'ayant pas traversé le disque, les moyens de réflexion étant destinés à dévier ce faisceau de manière à ce qu'il traverse le disque puis atteigne le récepteur multicanaux.

### Troisième mode de réalisation

La figure 7 illustre un mode de réalisation dans lequel pour avoir la source lumineuse 1 et le récepteur multicanaux 5 disposés du même côté du disque 3 polarisant, le disque comporte deux surfaces tronc-coniques, dont une est constituée d'un réflecteur polarisant, agencées de manière à ce qu'un rayon incident soit renvoyé vers le récepteur. Les moyens de discrimination de chaque demi-tour du disque sont constitués par un secteur plus réfléchissant ou plus opaque 70 intégré à la surface la plus externe du dispositif précédent.

Les surfaces sont deux tronc de cône dont les sommets sont répartis de par et d'autre du disque de manière à ce que leur arrêtes soient perpendiculaires entre elles et inclinées de 45° par rapport au faisceau.

### Quatrième mode de réalisation

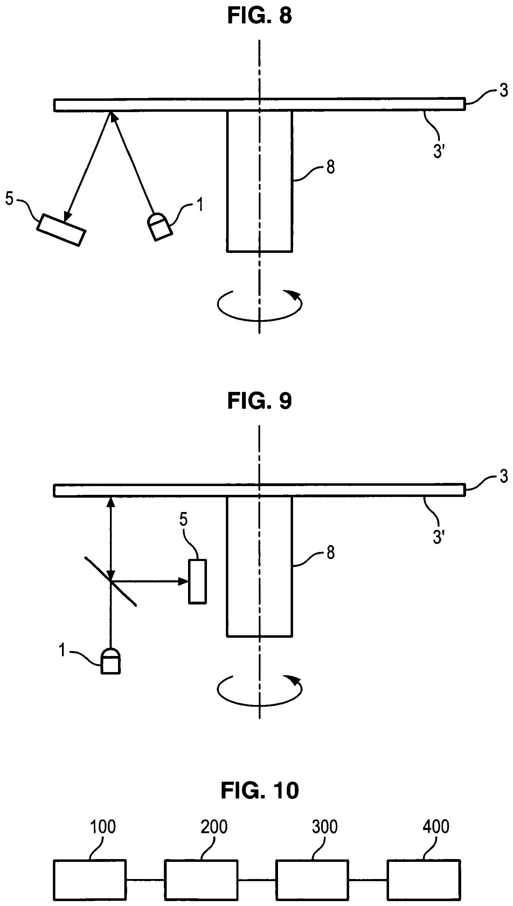

La figure 8 illustre un mode réalisation dans lequel pour avoir la source lumineuse 1 et le récepteur 5 multicanaux disposés du même côté du disque 3 mobile polarisant, le disque mobile 3 polarisant comporte un traitement 3' réfléchissant pour dévier un faisceau lumineux frappant le disque vers le récepteur 5 multicanaux.

Le traitement réfléchissant 3' est par exemple un dépôt constitué d'un nanoréseau métallique pour lequel le pas est largement inférieur à la longueur d'onde de la lumière incidente.

Dans ce mode de réalisation, l'agencement de la source lumineuse 1 et du récepteur multicanaux doit être tel qu'il permet d'émettre un faisceau vers le disque 3 mobile polarisant pour qu'il soit réfléchi vers le récepteur 5 multicanaux.

En variante, tel qu'illustré sur la figure 9 on peut prévoir des moyens de réflexions constitués par un miroir semi-transparent disposé sur le trajet d'un faisceau issu de la source lumineuse, ledit miroir étant destiné à dévier un faisceau lumineux réfléchit par le disque vers le récepteur multicanaux.

### Procédé de traitement

La figure 10 illustre schématiquement des étapes du procédé pour obtenir l'angle de rotation de l'arbre du capteur selon le mode de réalisation de la figure 5.

Au cours de la rotation de l'axe, des signaux sinusoïdaux représentatifs d'une intensité lumineuse issue d'un polariseur fixe sont générés 100.

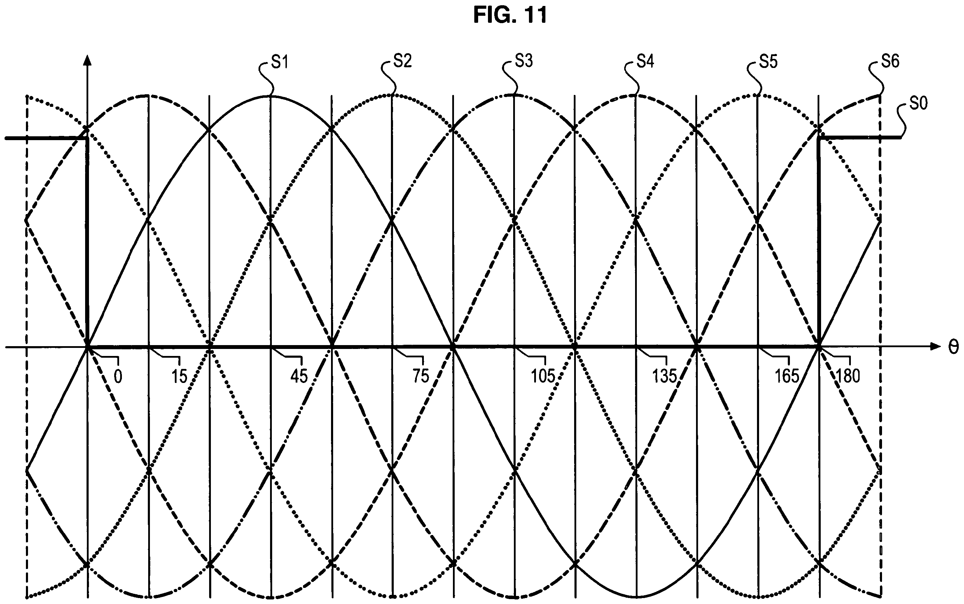

La figure 11 illustre des signaux générés par le module de réception 5 du capteur illustré et qui sont destinés à être traités par le module de traitement 6.

On a représenté six signaux S1, S2, S3, S4, S5, S6 ainsi que le signal détrompeur S0 respectivement générés pas les canaux du module de réception 5.

Comme on peut le constater bien que les signaux S1, S2, S3, S4, S5, S6 ont une période de 180°, grâce au signal détrompeur S0, il est possible de déterminer à quel demi-tour chaque signal correspond.

Ces signaux issus du module de réception 5 sont mis en forme par amplification différentielle pour former un système de signaux de référence N-phasés équilibré.

Les signaux S1-S6 sont des signaux hexaphasés équilibrés qui varient en fonction de l'angle de rotation θ de l'axe 8 du capteur.

En outre sur la figure 11 le signal détrompeur S0 est représenté en fonction de l'angle de rotation θ de l'axe 8 du capteur.

Une détection 200 des parties linéaires de chaque signal sinusoïdal S1-S6 est mise en œuvre par décalage au moyens d'additionneurs soustracteurs de manière à ce que leurs zones linéaires correspondent à des fractions d'une demi-rampe analogique.

Ensuite un système de comparateurs et de logique combinatoire permet de commander un multiplexeur analogique de manière à commuter le bon signal décalé sur la sortie analogique.

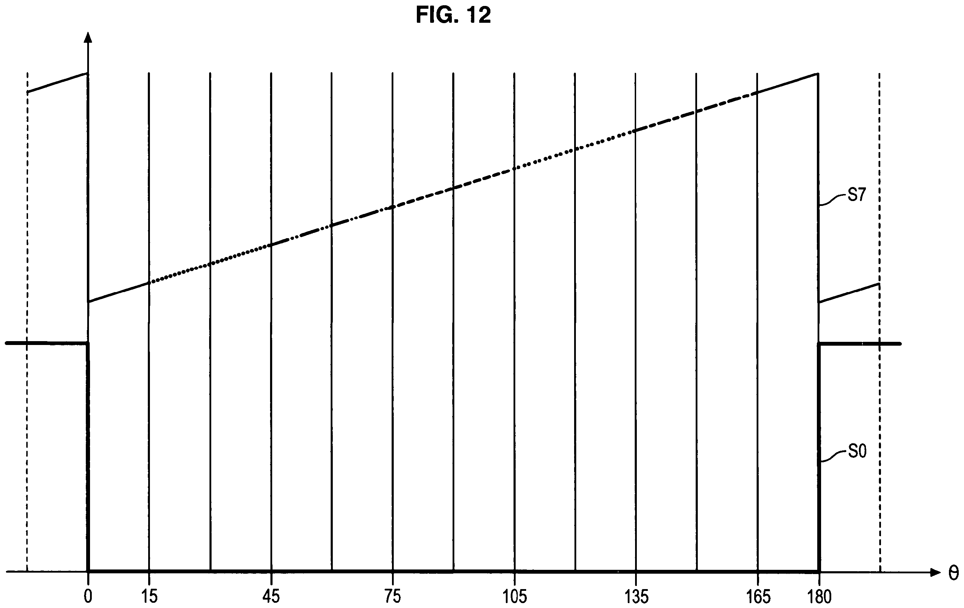

Ce principe reconstitue un signal proportionnel à la position angulaire de l'axe du capteur sur 180°. On obtient 300 ainsi en sortie un signal de demi-rampe analogique S7 tel qu'illustré sur la figure 12.

La figure 8 illustre un signal de demi-rampe analogique S7 et le signal détrompeur S0. Ce signal de demi-rampe analogique S7 est constitué des parties linéaires des signaux hexaphasés équilibrés S1-S6.

Par un système d'amplification et somme, le signal détrompeur S0 commande le décalage du signal de demi-rampe analogique.

Une rampe analogique S8 complète sur 360° est ainsi reconstituée 400 par un choix convenable des gains d'amplification.

Par ce principe, le capteur optique fournit, de la même manière qu'un potentiomètre, un signal S8 proportionnel à la position de son axe sur une plage comprise entre 0 et 360°.

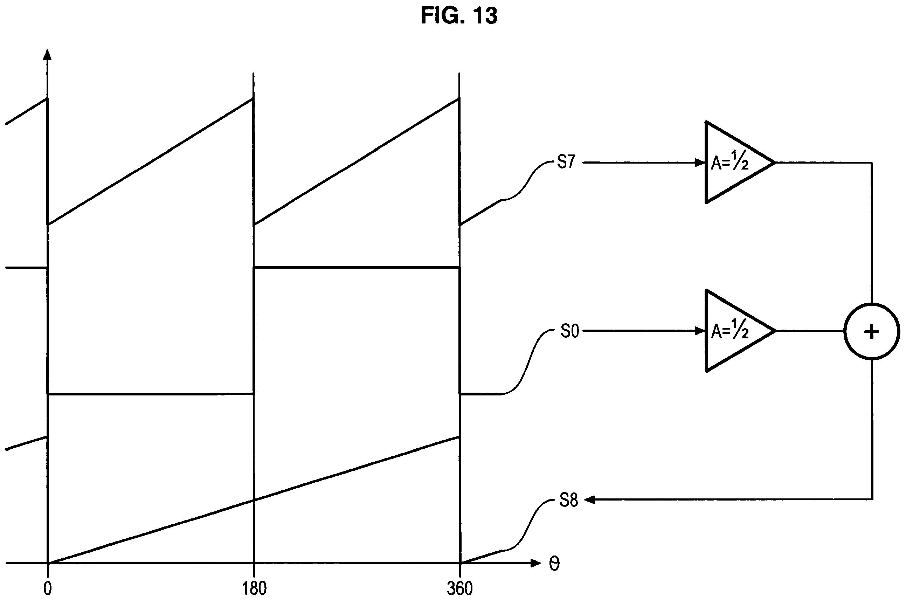

Ce principe est illustré sur la figure 13, le signal demi-rampe S7 est combiné avec le signal détrompeur S0 de demi-tour pour obtenir en sortie un signal proportionnel à l'angle du capteur S8 sur 360°.

L'angle recherché se déduit enfin du signal S8 d'après la relation θ = (S8(θ)-B)/A, A et B étant respectivement la pente et l'ordonnée à l'origine de la rampe analogique.

## Revendications

1. Capteur optique de position angulaire absolue sur 360° d'un axe (8) mobile en rotation comprenant :
un disque (3) mobile polarisant destiné à polariser linéairement la lumière, le disque (3) étant solidaire de l'axe (8) ;
une source lumineuse (1) destinée à émettre un faisceau lumineux en direction du disque (3) ;
une pluralité de polariseurs fixes (Pi), chacun étant destiné à polariser linéairement la lumière selon une direction prédéfinie ;
un module de réception (5) multicanaux destiné à générer au moins deux signaux d'intensité lumineuse, chaque signal d'intensité lumineuse étant proportionnels à l'intensité lumineuse du faisceau issu de l'un des polariseurs (Pi) ;
dans lequel le capteur comprend en outre des moyens de discrimination (7,7', 70) de chaque demi-tour de l'axe (8) ; les moyens de discrimination (7,7',70) étant disposés sur le trajet du faisceau lumineux et configurés pour qu'à chaque demi-tour de l'axe (8) le module de réception (5) génère un signal détrompeur discriminant un faisceau passant par les moyens de discrimination d'un faisceau ne passant pas par les moyens de discrimination ; et
des moyens de traitement des au moins deux signaux d'intensité lumineuse ainsi que du signal détrompeur de demi-tour de manière à obtenir une position angulaire de l'axe (8) disque ; et
la source lumineuse, et le récepteur multicanaux sont disposés du même côté par rapport au disque (3) mobile polarisant, sur un même plan sensiblement parallèle au disque (3) mobile polarisant, et
**caractérisé en ce que** les moyens de discrimination (7,7', 70) sont constitués par deux surfaces réfléchissantes formées dans l'épaisseur du disque (3) mobile polarisant et disposées en périphérie dudit disque (3) mobile polarisant.

2. Capteur optique selon la revendication précédente comprenant des moyens de réflexion disposés sur le trajet d'un faisceau ayant traversé le disque, les moyens de réflexion étant destinés à dévier un faisceau ayant traversé le disque vers le récepteur multicanaux sans retraverser le disque.

3. Capteur optique selon l'une des revendications 1 à 2 dans lequel le disque mobile polarisant comporte un traitement réfléchissant pour dévier un faisceau lumineux frappant le disque vers le récepteur multicanaux.

4. Capteur optique selon la revendication 3 comprenant des moyens de réflexions constitués par un miroir disposé sur le trajet d'un faisceau issu de la source lumineuse, ledit miroir étant destiné à dévier un faisceau lumineux réfléchit par le disque vers le récepteur multicanaux.

5. Capteur optique selon l'une des revendications 1 à 4 dans lequel les directions de polarisations des polariseurs fixes sont régulièrement espacées entre 0 et 180°.

6. Procédé d'obtention de la position angulaire d'un axe mobile en rotation au moyen d'un capteur optique selon l'une des revendications 1 à 5 comprenant les étapes consistant à :
- générer (100) des signaux sinusoïdaux représentatifs d'une intensité lumineuse issue d'un polariseur fixe ;
- détecter (200) les parties linéaires de chaque signal sinusoïdal ;
- générer (300) un signal de demi-rampe représentant chaque partie linéaire détectée en fonction de l'angle de rotation de l'axe du capteur ;
- générer (400) un signal rampe sur 360° proportionnel à la position angulaire de l'objet à mesurer à partir du signal demi-rampe et du signal détrompeur.

## Patentansprüche

1. Optischer Sensor für absolute Winkelposition von 360° einer drehbeweglichen Achse (8), umfassend:
eine polarisierende bewegliche Scheibe (3) die dazu bestimmt ist, das Licht linear zu polarisieren, wobei die Scheibe (3) fest mit der Achse (8) verbunden ist;
eine Lichtquelle (1), die dazu bestimmt ist, einen Lichtstrahl in Richtung der Scheibe (3) auszugeben;
eine Vielzahl von festen Polarisatoren (Pi), von denen jeder dazu bestimmt ist, das Licht linear in einer vordefinierten Richtung zu polarisieren;
ein Mehrkanal-Empfangsmodul (5), das dazu bestimmt ist, mindestens zwei Lichtstärkesignale zu generieren, wobei jedes Lichtstärkesignal proportional zur Lichtstärke des Strahls aus einem der Polarisatoren (Pi) ist;
wobei der Sensor weiter Mittel zum Unterscheiden (7, 7', 70) jeder halben Umdrehung der Achse (8) umfasst; wobei die Mittel zum Unterscheiden (7, 7', 70) auf dem Pfad des Lichtstrahls angeordnet sind, und konfiguriert sind, damit das Empfangsmodul (5) bei jeder halben Umdrehung der Achse (8) ein Unverwechselbarkeitssignal generiert, das einen Strahl, der durch die Mittel zur Unterscheidung eines Strahls verläuft, von einem Strahl unterscheidet, der nicht durch die Mittel zur Unterscheidung verläuft; und
Mittel zur Verarbeitung der mindestens zwei Lichtstärkesignale, sowie des Unverwechselbarkeitssignals der halben Umdrehung, um eine Winkelposition der Scheibenachse (8) zu erhalten; und
die Lichtquelle und der Mehrkanal-Empfänger auf derselben Seite in Bezug auf die polarisierende bewegliche Scheibe (3) auf einer selben Ebene, im Wesentlichen parallel zur polarisierenden beweglichen Scheibe (3) angeordnet sind, und
**dadurch gekennzeichnet, dass** die Mittel zum Unterscheiden (7, 7', 70) aus zwei reflektierenden Oberflächen bestehen, die in der Dicke der polarisierenden beweglichen Scheibe (3) gebildet sind, und an der Peripherie der polarisierenden beweglichen Scheibe (3) angeordnet sind.

2. Optischer Sensor nach dem vorstehenden Anspruch, der Reflexionsmittel umfasst, die auf dem Pfad eines Strahls angeordnet sind, der die Scheibe durchquert hat, wobei die Reflexionsmittel dazu bestimmt sind, einen Strahl der die Scheibe durchquert hat, zum Mehrkanal-Empfänger umzuleiten, ohne die Scheibe erneut zu durchqueren.

3. Optischer Sensor nach einem der Ansprüche 1 bis 2, wobei die polarisierende bewegliche Scheibe eine Reflexionsverarbeitung beinhaltet, um einen Lichtstrahl, der auf die Scheibe auftrifft, zum Mehrkanal-Empfänger umzuleiten.

4. Optischer Sensor nach Anspruch 3, der Reflexionsmittel umfasst, die aus einem Spiegel bestehen, der auf dem Pfad eines Strahls aus der Lichtquelle angeordnet ist, wobei der Spiegel dazu bestimmt ist, einen Lichtstrahl, der von der Scheibe reflektiert wird, zum Mehrkanal-Empfänger umzuleiten.

5. Optischer Sensor nach einem der Ansprüche 1 bis 4, wobei die Polarisationsrichtungen der festen Polarisatoren regelmäßig zwischen 0 und 180° beabstandet sind.

6. Verfahren zum Erhalten der Winkelposition einer drehbeweglichen Achse anhand eines optischen Sensors nach einem der Ansprüche 1 bis 5, die Schritte umfassend, bestehend aus:
- Generieren (100) der repräsentativen Sinussignale einer Lichtstärke aus einem festen Polarisator;
- Erkennen (200) der linearen Teile eines jeden Sinussignals;
- Generieren (300) eines Halbrampensignals, das jeden erkannten linearen Teil in Abhängigkeit von dem Drehwinkel der Achse des Sensors repräsentiert;
- Generieren (400) eines Rampensignals von 360° proportional zur Winkelposition des zu messenden Objekts ausgehend von dem Halbrampensignal und dem Unverwechselbarkeitssignal.

## Claims

1. An optical sensor of absolute angular position over 360° of a rotatably movable axis (8) comprising:
a movable polarizing disc (3) intended to linearly polarize the light, the disc (3) being secured to the axis (8);
a light source (1) intended to emit a light beam in the direction of the disc (3);
a plurality of fixed polarizers (Pi), each being intended to linearly polarize the light in a predefined direction;
a multichannel reception module (5) intended to generate at least two light intensity signals, each light intensity signal being proportional to the light intensity of the beam coming from one of the polarizers (Pi);
in which the sensor further comprises discrimination means (7,7', 70) of each half-turn of the axis (8); the discrimination means (7,7', 70) being disposed on the path of the light beam and configured so that at each half-turn of the axis (8) the reception module (5) generates a foolproof signal discriminating a beam passing through the discrimination means of a beam not passing through the discrimination means; and
means for processing the at least two light intensity signals as well as the half-turn foolproof signal so as to obtain an angular position of the axis (8) disc; and
the light source, and the multichannel receiver are disposed on the same side with respect to the movable polarizing disc (3), on the same plane substantially parallel to the movable polarizing disc (3), and
**characterized in that** the discrimination means (7,7', 70) consist of two reflecting surfaces formed in the thickness of the movable polarizing disc (3) and disposed at the periphery of said movable polarizing disc (3).

2. The optical sensor according to the preceding claim comprising reflection means disposed on the path of a beam having passed through the disc, the reflection means being intended to deflect a beam having crossed the disc towards the multichannel receiver without crossing the disc again.

3. The optical sensor according to one of claims 1 to 2 wherein the movable polarizing disc includes a reflective treatment to deflect a light beam striking the disc towards the multichannel receiver.

4. The optical sensor according to claim 3 comprising reflection means consist of a mirror disposed on the path of a beam coming from the light source, said mirror being intended to deflect a light beam reflected by the disk towards the multichannel receiver.

5. The optical sensor according to one of claims 1 to 4 wherein the polarization directions of the fixed polarizers are regularly spaced between 0 and 180°.

6. A method for obtaining the angular position of a rotatably movable axis by means of an optical sensor according to one of claims 1 to 5 comprising the steps consisting to:
- generate (100) sinusoidal signals representative of a light intensity coming from a fixed polarizer;
- detect (200) the linear portions of each sinusoidal signal;
- generate (300) a half-ramp signal representing each linear portion detected as a function of the angle of rotation of the sensor axis;
- generate (400) a ramp signal over 360° proportional to the angular position of the object to be measured from the half-ramp signal and the foolproof signal.
